# FASCICULE DE BREVET EUROPEEN

(11) **EP 2 776 260 B1**
(45) Date de publication et mention de la délivrance du brevet: **03.02.2016**
(21) Numéro de dépôt: 12795504.5
(22) Date de dépôt: 08.11.2012
(51) Int. Cl.: B60H 3/02, B60H 1/00

(54) **PROCÉDÉ DE RAFRAICHISSEMENT DE L'AIR DE L'HABITACLE D'UN VÉHICULE AUTOMOBILE**
VERFAHREN ZUR LUFTERFRISCHUNG DER KABINE EINES MOTORFAHRZEUGS
METHOD FOR FRESHENING THE AIR OF THE CABIN OF A MOTOR VEHICLE

(30) Priorité: 10.11.2011 FR 1160254
(43) Date de publication de la demande: 17.09.2014
(73) Titulaire: Peugeot Citroën Automobiles SA, 78140 Vélizy Villacoublay (FR)
(72) Inventeur: PINTAT, Bruno, F-92140 Clamart (FR); DUMUR, Denis, F-78990 Elancourt (FR)
(86) Numéro de dépôt international: PCT/FR2012/052579
(87) Numéro de publication internationale: WO 2013/068697

(56) Documents cités:
- JP-A- 57 147 913
- JP-A- 2011 208 844
- US-A- 4 340 112

## Description

Procédé de rafraichissement de l'air de l'habitacle d'un véhicule automobile.

L'invention concerne un procédé de rafraichissement de l'air de l'habitacle d'un véhicule automobile.

Les systèmes de rafraichissement d'air de l'habitacle d'un véhicule automobile permettent d'assurer le confort thermique des passagers du véhicule.

Notamment, en ce qui concerne le confort thermique des passagers situés sur les sièges arrière, il existe plusieurs systèmes.

Par exemple, le rafraichissement des passagers arrière peut être assuré par un procédé impliquant un système de ventilation additionnelle, mais auquel cas l'air soufflé n'est pas suffisamment refroidi.

On connait également un système impliquant une ventilation réfrigérée intégrant un pulseur d'air relais via le climatiseur principal mais dans ce cas, la quantité de carburant consommée est significativement augmentée.

Par ailleurs, le rafraichissement de l'air ne doit pas nuire à la sécurité des passagers, par exemple par un embuage prononcé des vitres du véhicule, doit être performant lorsqu'il est en fonctionnement et doit présenter une fiabilité suffisante.

Un procédé selon le préambule de la revendication 1 est décrit dans le document US 4 340 112.

Dans ce contexte, la présente invention vise un procédé de rafraichissement de l'air de l'habitacle d'un véhicule automobile assurant le rafraichissement des passagers, notamment des passagers des sièges arrière, sans augmenter substantiellement la consommation en carburant, qui est par ailleurs fiable et qui ne nuit pas à la sécurité des passagers.

A cet effet, le procédé de rafraichissement de l'air de l'habitacle d'un véhicule automobile selon l'invention est caractérisé en ce qu'il met en jeu un système de rafraichissement d'air comprenant un nébuliseur à ultrasons placé dans un réservoir et plongé dans un liquide de nébulisation à partir duquel le nébuliseur génère des fines gouttelettes, et des moyens d'entraînement des dites fines gouttelettes vers l'habitacle du véhicule, et en ce que le système de rafraichissement d'air est activé en fonctionnement si au moins la condition selon laquelle le niveau du liquide de nébulisation dans le réservoir est suffisant pour assurer le fonctionnement du nébuliseur à ultrasons, est remplie et le système de rafraichissement d'air est apte à assurer le rafraichissement des passagers arrière du véhicule automobile et est activé en fonctionnement si au moins une condition selon laquelle les aérateurs situés au niveau des places arrières du véhicule automobile sont en position ouverte, est remplie.

Le procédé de l'invention peut également comporter les caractéristiques optionnelles suivantes considérées isolément ou selon toutes les combinaisons techniques possibles :
- le système de rafraichissement d'air est activé en fonctionnement si au moins une condition garantissant directement ou indirectement un faible pourcentage d'hygrométrie dans l'habitacle, est remplie.
- le système de rafraichissement d'air est activé en fonctionnement si au moins une condition selon laquelle le pourcentage d'hygrométrie dans l'habitacle est inférieur à un pourcentage seuil, est remplie.
- le système de rafraichissement d'air est activé en fonctionnement si au moins une condition selon laquelle le pourcentage d'hygrométrie dans l'habitacle est inférieur ou égal à 50%, est remplie.
- le système de rafraichissement d'air est activé en fonctionnement si au moins une condition selon laquelle le pourcentage de recirculation d'air dans l'habitacle est inférieur à un pourcentage seuil, est remplie.
- le système de rafraichissement d'air est activé en fonctionnement si au moins une condition selon laquelle le pourcentage de recirculation d'air dans l'habitacle est inférieur ou égal à 50%, est remplie.
- le système de rafraichissement d'air est activé en fonctionnement si au moins une condition selon laquelle la climatisation de l'habitacle du véhicule est en fonctionnement, est remplie.
- le système de rafraichissement d'air est activé en fonctionnement lorsque :
- la condition selon laquelle les aérateurs situés au niveau des places arrière du véhicule sont en position ouverte, est remplie,
- la condition selon laquelle la climatisation dans l'habitacle du véhicule est en fonctionnement, est remplie,
- la condition selon laquelle le pourcentage d'hygrométrie dans l'habitacle est inférieur ou égal à 50%, est remplie, et
- la condition selon laquelle le pourcentage de recirculation d'air dans l'habitacle est inférieur ou égal à 50%, est remplie.
- la mise en fonctionnement du système de rafraichissement d'air comprend, dans l'ordre :
   - une étape d'activation des moyens d'entraînement des fines gouttelettes générées par le nébuliseur,
   - une étape de maintien de la dite étape préalable d'activation pendant un temps compris entre 2 et 8 secondes, et
   - une étape d'activation du nébuliseur à ultrasons.

D'autres caractéristiques et avantages de l'invention ressortiront clairement de la description qui en est donnée ci-dessous, à titre indicatif et nullement limitatif, en référence aux figures annexées parmi lesquelles :
- la figure 1 est une représentation schématique d'un dispositif de rafraichissement d'air de l'habitacle d'un véhicule automobile, et
- la figure 2 est un logigramme représentant schématiquement les conditions d'activation du dispositif de rafraichissement d'air de l'habitacle de la figure 1 selon le procédé de l'invention.

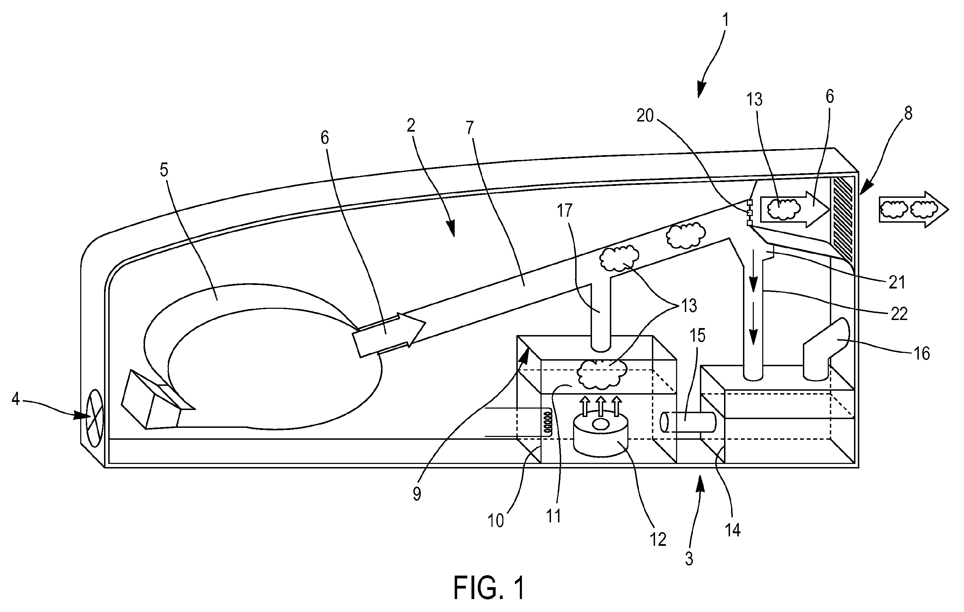

En référence à la figure 1, la console centrale 1 d'un véhicule automobile située traditionnellement sous le tableau de bord et positionné entre les sièges du conducteur et du passager avant, comprend notamment un système de rafraichissement d'air par nébulisation 2.

Le système de rafraichissement d'air par nébulisation 2 comprend une entrée d'air 4, de préférence munie d'un filtre non représenté. L'air amené dans le système de rafraichissement 2 est celui de l'habitacle du véhicule.

A cet effet, un pulseur d'air 5 aspire l'air de l'habitable du véhicule au moyen d'une turbine non représentée de sorte que l'air pénètre dans le système de rafraichissement par l'entrée d'air 4.

Par ailleurs, le pulseur d'air 5 génère un flux d'air 6 qui est soufflé dans un conduit d'entraînement 7 en direction de la sortie 8 du système de rafraichissement 2 vers l'habitacle du véhicule.

Le système de rafraichissement d'air 2 comprend en outre une chambre de nébulisation 9 constituée d'un réservoir de nébulisation 10 rempli de liquide de nébulisation 11, dans cet exemple de l'eau.

Un nébuliseur à ultrasons 12 constitué d'un oscillateur piézo-électrique 12 est plongé dans le liquide de nébulisation 11.

De façon bien connue de l'homme du métier, un nébuliseur à ultrasons 12 fonctionnant à une fréquence d'environ 2 mégaHertz génère une brume composée de fines gouttelettes de liquide 13 de taille moyenne inférieure à 5 micromètres.

Dans cet exemple, l'élément vibrant provoquant la formation des fines gouttelettes de liquide 13 est l'oscillateur piézo-électrique 12 sous tension alimenté de façon connue par un courant continu très basse tension par exemple de 12 ou de 20 Volts.

La quantité d'eau 11 présente dans le réservoir de nébulisation 10 doit toujours être suffisante pour que l'oscillateur piézo-électrique soit immergé.

A cet effet, un réservoir annexe 14 est relié au réservoir de nébulisation 10 au moyen d'un conduit 15. Le réservoir annexe 14 peut être rempli directement par l'utilisateur au moyen d'un goulot 16 donnant accès par l'utilisateur au réservoir annexe 14 depuis l'habitable du véhicule.

Les fines gouttelettes de liquide 13 générées par le nébuliseur à ultrasons 12 sont injectées dans le conduit d'entraînement 7 via un conduit d'acheminement 17 reliant la chambre de nébulisation 9 au conduit d'entraînement 7. Pour ce faire, le nébuliseur à ultrasons 12 peut être couplé à un ventilateur non représenté qui va générer un flux d'air secondaire entraînant les fines gouttelettes de liquide 13 jusqu'au conduit d'entraînement 7.

Dans une variante non représentée, une partie du flux d'air 6 peut être détourné du conduit d'entraînement 7 pour participer à l'entraînement des fines gouttelettes de liquide 13 vers le dit conduit d'entraînement 7 via le conduit d'acheminement 17.

Les fines gouttelettes d'eau 13 qui pénètrent dans le conduit d'entraînement 7 vont se condenser au contact des parois du dit conduits 7. Pour éviter ce phénomène, une grille 20 est disposée à l'extrémité du conduit d'entraînement 7 de façon à forcer et à localiser la condensation au niveau de la grille 20.

Les condensats issus de la condensation des fines gouttelettes d'eau 13 sont récupérés dans un bac à condensats 21 qui est agencé de façon que l'évacuation des condensats puissent s'effectuer par gravité quelque soit l'inclinaison du véhicule.

Par ailleurs, le bac à condensats 21 se prolonge vers le bas par un conduit d'évacuation 22 qui débouche dans le réservoir annexe 14.

Par cet agencement, les condensats formés au niveau de la grille sont recyclés dans le système de rafraichissement d'air 2 et subissent de nouveau une nébulisation.

Le mélange de flux d'air 6 et de fines gouttelettes d'eau 13 qui a traversé la grille 20 est acheminé jusqu'à la sortie 8 faite d'un diffuseur 13 orientable par l'utilisateur.

Le système de rafraichissement 2 présente en outre un dispositif de commande non représenté qui permet à l'utilisateur de régler la puissance de nébulisation et la vitesse de sortie du flux d'air contenant les fines gouttelettes d'eau. Le dispositif de commande pourra également commander de façon automatique le fonctionnement du système de rafraichissement selon la température et/ou le degré d'hygrométrie de l'air présent dans l'habitacle du véhicule automobile.

Ce système présente notamment l'avantage d'être indépendant de tout autre système de ventilation et/ou de climatisation.

Un tel système permet d'abaisser la température de l'air soufflé en direction des passagers d'environ 10°C par rapport à la température de l'air ambiant dans le véhicule. Bien entendu, la finesse des gouttelettes est telle que l'utilisateur ne ressentira qu'une sensation de fraîcheur sans percevoir de sensation d'humidité.

Selon l'invention, le fonctionnement du système de rafraichissement d'air est contrôlé, de sorte que l'activation de ce système de rafraichissement n'est établit que sous certaines conditions.

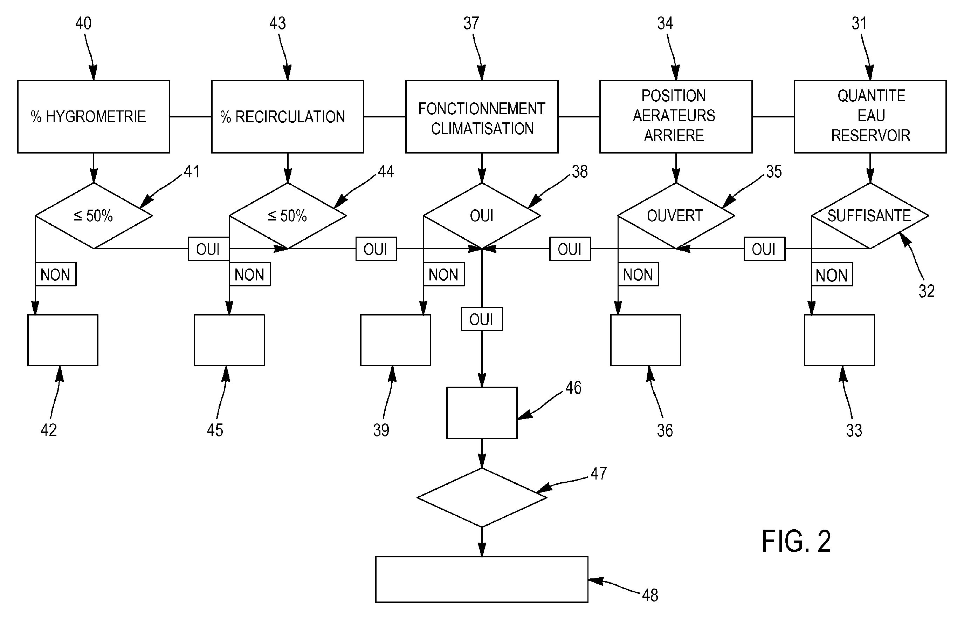

En premier lieu, selon la figure 2, le procédé de l'invention comprend une première étape de vérification 31 de la quantité d'eau contenue dans le réservoir de nébulisation 10 qui doit remplir la condition 32 d'être suffisante pour ne pas endommager l'oscillateur piézo-électrique 12.

Si la quantité d'eau contenue dans le réservoir de nébulisation 10 est insuffisante, le système de rafraichissement 2 est commandé en phase d'arrêt 33.

Si la quantité d'eau contenue dans le réservoir de nébulisation 10 est au contraire suffisante, la deuxième étape de vérification 34 est contrôlée.

La deuxième étape de vérification 34 consiste à établir si les aérateurs situés au niveau des sièges arrière sont en position ouverte.

En effet, lorsque le système de rafraichissement d'air est destiné aux occupants des sièges arrière, si les aérateurs sont en position fermée pendant que le nébuliseur fonctionne, une importante rétention d'eau en amont des aérateurs sera observée, cette rétention d'eau étant préjudiciable au fonctionnement du système de rafraichissement 2.

Par conséquent, si les aérateurs sont en position fermée, la condition 35 n'est pas remplie et le système de rafraichissement d'air 2 est commandé en phase d'arrêt 36.

Au contraire, si les aérateurs sont position ouverte, la condition 5 est remplie et la troisième étape de vérification 37 est contrôlée.

La troisième étape de vérification 37 consiste à établir si la climatisation est en fonctionnement ou non.

En effet, le rafraichissement provoqué par le système de rafraichissement 2 présenté précédemment est efficace si l'air de l'habitacle est suffisamment sec. Or le fonctionnement de la climatisation de l'habitacle permet de générer un air sec dans l'habitacle, et permet en outre de limiter les risques d'embuage interne des vitres des ouvrants.

Par conséquent, si la climatisation n'est pas en fonctionnement, la condition 38 n'est pas remplie et le système de rafraichissement d'air est commandé en phase d'arrêt 39.

Au contraire, si la climatisation est en fonctionnement, la condition 38 est remplie et le contrôle des conditions pour la mise en marche du système de rafraichissement d'air se poursuit.

En parallèle des première 31, seconde, 34 et troisième 37 étapes de vérification, une quatrième étape de vérification 40 est mise en oeuvre.

Cette quatrième étape de vérification 40 consiste à établir si le pourcentage d'hygrométrie est inférieur ou égal à 50%.

En effet, comme précédemment décrit pour la troisième étape de vérification 37 de fonctionnement de la climatisation, l'efficacité du système de refroidissement d'air sera d'autant plus importante que l'air de l'habitacle est sec.

Une limite à 50% de pourcentage d'hygrométrie est fixée dans le présent exemple de réalisation, mais il peut être prévu un seuil sensiblement plus bas ou plus haut.

Par conséquent, si le pourcentage d'hygrométrie est supérieur à 50%, la condition 41 n'est pas remplie et le système de rafraichissement d'air 2 est commandé en phase d'arrêt.

Au contraire, si le pourcentage d'hygrométrie est inférieur ou égal à 50%, la cinquième étape de vérification 43 est contrôlée.

La cinquième étape de vérification 43 consiste à vérifier si le pourcentage de recirculation d'air est inférieur ou égal à 50%.

En effet, si le pourcentage de recirculation est important et que le système de rafraichissement par nébulisation 2 fonctionne, l'habitacle sera rapidement saturé en humidité ce qui provoquera d'une part un embuage interne des vitres des ouvrant, ce qui peut s'avérer dangereux en terme de sécurité, et d'autre part, comme expliqué précédemment, le rafraichissement de l'air sera alors moins efficace.

Par conséquent, si le pourcentage de recirculation est supérieur à 50%, la condition 44 n'est pas remplie et le système de rafraichissement d'air est commandé en phase d'arrêt 45.

Au contraire, si le pourcentage de recirculation est inférieur ou égal à 50%, la condition 44 est remplie.

Dans le cas où la condition 44 selon laquelle le pourcentage de recirculation est inférieur ou égal à 50% et où la condition 38 selon laquelle la climatisation est en fonctionnement, le système de rafraichissement 2 est alors activé en fonctionnement selon les modalités suivantes.

Le pulseur d'air 5 (figure 1) est d'abord activé selon une étape d'activation du pulseur d'air 46. Le fonctionnement du pulseur d'air 5 est maintenu pendant un temps compris entre 2 et 8 secondes, de préférence 5 secondes, selon une étape de maintien 47.

Puis, à l'issue de l'étape de maintien 47, le nébuliseur à ultrasons 12 est activé en fonctionnement selon une étape d'activation du nébuliseur 48.

La mise en fonctionnement du pulseur 5 avant le nébuliseur à ultrasons 12 est nécessaire pour deux raisons.

En premier lieu, si le nébuliseur à ultrasons 12 fonctionnement sans que les moyens d'entraînement des gouttelettes ne fonctionnent, la nébulisation sera visible dans l'habitacle et pourra même s'apparenter à un dégagement de fumée.

Par ailleurs, cette étape de maintien 47 permet d'éviter les projections de gouttelettes à travers les aérateurs.

Le procédé décrit en référence à la figure 2, comprend ainsi 5 étapes de vérification.

Il est à noter que les troisième 37, quatrième 40 et cinquième 43 étapes de vérification sont toutes liées de façon directe ou indirecte au pourcentage d'hygrométrie de l'air dans l'habitacle. Plus précisément, ces troisième 37, quatrième 40 et cinquième 43 étapes de vérification permettent chacune de garantir un pourcentage d'hygrométrie de l'air de l'habitacle suffisamment bas.

Parmi ces étapes de vérification, la première étape de vérification 31 est essentielle puisqu'une trop faible quantité d'eau dans le réservoir de nébulisation 10 risquerait d'endommager le nébuliseur à ultrasons 12.

En revanche, il peut être prévu selon l'invention que cette étape de vérification 31 soit la seule effectuée pour activer la mise en fonctionnement du nébuliseur 12 où que l'une seulement, ou plus, des deuxième 34, troisième 37, quatrième 40 ou cinquième 43 étapes de vérification soient mise en oeuvre selon un ordre quelconque.

Par ailleurs, on peut prévoir que les cinq étapes de vérification 31, 34, 37, 40 et 43 décrites en référence à la figure 2 soient mise en oeuvre selon un ordre différent de celui précédemment décrit.

Enfin, l'homme du métier saura adapter des moyens de mise en oeuvre du procédé précédemment décrit.

## Revendications

1. Procédé de rafraichissement de l'air de l'habitacle d'un véhicule automobile, mettant en jeu un système de rafraichissement d'air (2) comprenant un nébuliseur à ultrasons (12) placé dans un réservoir (10) et plongé dans un liquide de nébulisation (11) à partir duquel le nébuliseur (12) génère des fines gouttelettes (13), et des moyens d'entraînement (5,6) des dites fines gouttelettes (13) vers l'habitacle du véhicule ; le système de rafraichissement d'air (2) étant activé en fonctionnement si au moins la condition (32) selon laquelle le niveau du liquide de nébulisation (11) dans le réservoir (10) est suffisant pour assurer le fonctionnement du nébuliseur à ultrasons (12) est remplie, **caractérisé en ce que** le système de rafraichissement d'air (2) est apte à assurer le rafraichissement des passagers arrière du véhicule automobile et est activé en fonctionnement si au moins une condition (35) selon laquelle les aérateurs situés au niveau des places arrières du véhicule automobile sont en position ouverte, est remplie.

2. Procédé selon la revendication 1, **caractérisé en ce que** le système de rafraichissement d'air (2) est activé en fonctionnement si au moins une condition (8,11,14) garantissant directement ou indirectement un faible pourcentage d'hygrométrie dans l'habitacle, est remplie.

3. Procédé selon l'une quelconque des revendications 1 et 2, **caractérisé en ce que** le système de rafraichissement d'air (2) est activé en fonctionnement si au moins une condition (41) selon laquelle le pourcentage d'hygrométrie dans l'habitacle est inférieur à un pourcentage seuil, est remplie.

4. Procédé selon la revendication 3, **caractérisé en ce que** le système de rafraichissement d'air (2) est activé en fonctionnement si au moins une condition (41) selon laquelle le pourcentage d'hygrométrie dans l'habitacle est inférieur ou égal à 50%, est remplie.

5. Procédé selon l'une quelconque des revendications 1 à 4, **caractérisé en ce que** le système de rafraichissement d'air (2) est activé en fonctionnement si au moins une condition (44) selon laquelle le pourcentage de recirculation d'air dans l'habitacle est inférieur à un pourcentage seuil, est remplie.

6. Procédé selon la revendication 5, **caractérisé en ce que** le système de rafraichissement d'air (2) est activé en fonctionnement si au moins une condition (44) selon laquelle le pourcentage de recirculation d'air dans l'habitacle est inférieur ou égal à 50%, est remplie.

7. Procédé selon l'une quelconque des revendications 1 à 6, **caractérisé en ce que** le système de rafraichissement d'air (2) est activé en fonctionnement si au moins une condition selon laquelle la climatisation de l'habitacle du véhicule est en fonctionnement, est remplie.

8. Procédé selon la revendication 1, **caractérisé en ce que** le système de rafraichissement d'air (2) est apte à assurer le rafraichissement des passagers arrière du véhicule automobile et est activé en fonctionnement lorsque :
- la condition (35) selon laquelle les aérateurs situés au niveau des places arrière du véhicule sont en position ouverte, est remplie,
- la condition (38) selon laquelle la climatisation dans l'habitacle du véhicule est en fonctionnement, est remplie,
- la condition (41) selon laquelle le pourcentage d'hygrométrie dans l'habitacle est inférieur ou égal à 50%, est remplie, et
- la condition (44) selon laquelle le pourcentage de recirculation d'air dans l'habitacle est inférieur ou égal à 50%, est remplie.

9. Procédé selon l'une quelconque des revendications précédentes, **caractérisé en ce que** la mise en fonctionnement du système de rafraichissement d'air (2) comprend, dans l'ordre :
- une étape d'activation (46) des moyens d'entraînement (5,6) des fines gouttelettes (13) générées par le nébuliseur à ultrasons (12),
- une étape de maintien (47) de la dite étape préalable d'activation (46) pendant un temps compris entre 2 et 8 secondes, et
- une étape d'activation (48) du nébuliseur à ultrasons (12).

## Patentansprüche

1. Verfahren zum Auffrischen der Luft des Fahrzeuginnenraums eines Kraftfahrzeugs, wobei ein Luftauffrischungssystem (2) zum Einsatz kommt, das einen Ultraschall-Zerstäuber (12) umfasst, der in einem Behälter (10) angebracht und in eine Zerstäuberflüssigkeit (11) getaucht ist, aus der der Zerstäuber (12) feine Tröpfchen (13) erzeugt, und Mittel zum Bewegen (5, 6) der besagten feinen Tröpfchen (13) in den Fahrzeuginnenraum des Fahrzeugs; wobei das Luftauffrischungssystem (2) in Betrieb genommen wird, wenn zumindest die Bedingung (32) wonach der Füllstand der Zerstäuberflüssigkeit (11) im Behälter (10) ausreichend ist, um den Betrieb des Ultraschall-Zerstäubers (12) zu gewährleisten, erfüllt ist, **dadurch gekennzeichnet, dass** das Luftauffrischungssystem (2) in der Lage ist, für die Auffrischung der rückwärtigen Fahrgäste des Kraftfahrzeugs zu sorgen, und in Betrieb genommen wird, wenn zumindest eine Bedingung (35), wonach sich die Lüfter, die sich im Bereich der hinteren Plätze des Kraftfahrzeugs befinden, in der offenen Stellung befinden, erfüllt ist.

2. Verfahren nach Anspruch 1, **dadurch gekennzeichnet, dass** das Luftauffrischungssystem (2) in Betrieb genommen wird, wenn zumindest eine Bedingung (41) zur direkten oder indirekten Gewährleistung eines geringen Prozentsatzes an Luftfeuchtigkeit im Fahrzeuginnenraum erfüllt ist.

3. Verfahren nach irgendeinem der Ansprüche 1 und 2, **dadurch gekennzeichnet, dass** das Luftauffrischungssystem (2) in Betrieb genommen wird, wenn zumindest eine Bedingung (41), wonach der Prozentsatz der Luftfeuchtigkeit im Fahrzeuginnenraum unter einem Prozentgrenzwert liegt, erfüllt ist.

4. Verfahren nach Anspruch 3, **dadurch gekennzeichnet, dass** das Luftauffrischungssystem (2) in Betrieb genommen wird, wenn zumindest eine Bedingung (41), wonach der Prozentsatz der Luftfeuchtigkeit im Fahrzeuginnenraum kleiner oder gleich 50% ist, erfüllt ist.

5. Verfahren nach irgendeinem der Ansprüche 1 bis 4, **dadurch gekennzeichnet, dass** das Luftauffrischungssystem (2) in Betrieb genommen wird, wenn zumindest eine Bedingung (44), wonach der Prozentsatz der Luftumwälzung im Fahrzeuginnenraum unter einem Prozentgrenzwert liegt, erfüllt ist.

6. Verfahren nach Anspruch 5, **dadurch gekennzeichnet, dass** das Luftauffrischungssystem (2) in Betrieb genommen wird, wenn zumindest eine Bedingung (44), wonach der Prozentsatz der Luftumwälzung im Fahrzeuginnenraum kleiner oder gleich 50% ist, erfüllt ist.

7. Verfahren nach irgendeinem der Ansprüche 1 bis 6, **dadurch gekennzeichnet, dass** das Luftauffrischungssystem (2) in Betrieb genommen wird, wenn zumindest eine Bedingung, wonach die Klimaanlage im Fahrzeuginnenraum des Fahrzeugs in Betrieb ist, erfüllt ist.

8. Verfahren nach Anspruch 1, **dadurch gekennzeichnet, dass** das Luftauffrischungssystem (2) in der Lage ist, für die Auffrischung der rückwärtigen Fahrgäste des Kraftfahrzeugs zu sorgen und in Betrieb genommen wird, wenn:
- die Bedingung (35), wonach sich die Lüfter, die sich im Bereich der hinteren Plätze des Fahrzeugs befinden, in der offenen Stellung befinden, erfüllt ist,
- die Bedingung (38), wonach die Klimaanlage im Fahrzeuginnenraum des Fahrzeugs in Betrieb ist, erfüllt ist,
- die Bedingung (41), wonach der Prozentsatz der Luftfeuchtigkeit im Fahrzeuginnenraum kleiner oder gleich 50% ist, erfüllt ist,
- Bedingung (44), wonach der Prozentsatz der Luftumwälzung im Fahrzeuginnenraum kleiner oder gleich 50% ist, erfüllt ist.

9. Verfahren nach irgendeinem der vorherigen Ansprüche, **dadurch gekennzeichnet, dass** die Inbetriebnahme des Luftauffrischungssystems (2) in der Reihenfolge folgendes umfasst:
- einen Schritt zum Aktivieren (46) der Mittel zum Bewegen (5, 6) der feinen Tröpfchen (13), die vom Ultraschall-Zerstäuber (12) erzeugt werden,
- einen Schritt zum Beibehalten (47) des besagten vorherigen Schrittes der Aktivierung (46) während eines Zeitraums zwischen 2 und 8 Sekunden, und
- einen Schritt zum Aktivieren (48) des Ultraschall-Zerstäubers (12).

## Claims

1. Method for freshening the air of the cabin of a motor vehicle, involving an air-freshening system (2) comprising an ultrasonic nebuliser (12) placed in a reservoir (10) and immersed in a nebulisation liquid (11) from which the nebuliser (12) generates fine droplets (13), and means (5, 6) for entraining said fine droplets (13) towards the cabin of the vehicle; the air-freshening system (2) being activated in operation if at least the condition (32) according to which the level of the nebulisation liquid (11) in the reservoir (10) is sufficient to ensure the functioning of the ultrasonic nebuliser (12) is fulfilled, **characterised in that** the air-freshening system (2) is able to provide the freshening of the rear passengers of the motor vehicle and is activated in operation if at least one condition (35) according to which the ventilators situated at the rear seats of the motor vehicle are in the open position, is fulfilled.

2. Method according to claim 1, **characterised in that** the air-freshening system (2) is activated in operation if at least one condition (41) guaranteeing, directly or indirectly, a low percentage humidity in the cabin is fulfilled.

3. Method according to either one of claims 1 or 2, **characterised in that** the air-freshening system (2) is activated in operation if at least one condition (41) according to which the humidity level in the cabin is below a threshold percentage, is fulfilled.

4. Method according to claim 3, **characterised in that** the air-freshening system (2) is activated in operation if at least one condition (41) according to which the percentage humidity in the cabin is less than or equal to 50%, is fulfilled.

5. Method according to any one of claims 1 to 4, **characterised in that** the air-freshening system (2) is activated in operation if at least one condition (44) according to which the percentage of air recirculation in the cabin is below a threshold percentage, is fulfilled.

6. Method according to claim 5, **characterised in that** the air-freshening system (2) is activated in operation if at least one condition (44) according to which the percentage of air recirculation in the cabin is less than or equal to 50%, is fulfilled.

7. Method according to any one of claims 1 to 6, **characterised in that** the air-freshening system (2) is activated in operation in at least one condition according to which the air conditioning in the vehicle cabin is in operation, is fulfilled,

8. Method according to claim 1, **characterised in that** the air-freshening system (2) is able to provide the freshening of the rear passengers of the motor vehicle and is activated in operation when:
- the condition (35) according to which the ventilators situated at the rear seats of the vehicle are in the open position, is fulfilled,
- the condition (38) according to which the air conditioning in the vehicle cabin is in operation, is fulfilled,
- the condition (41) according to which the percentage humidity in the cabin is less than or equal to 50%, is fulfilled and
- the condition (44) according to which the percentage of air recirculation in the cabin is less than or equal to 50%, is fulfilled.

9. Method according to any one of the preceding claims, **characterised in that** the starting up of the air-freshening system (2) comprises, in the following order:
- a step (46) of activating the means (5, 6) for entraining the fine droplets (13) generated by the ultrasonic nebuliser (12),
- a step (47) of maintaining said prior activation step (46) for a time of between 2 and 8 seconds, and
- a step (48) of activating the ultrasonic nebuliser (12).
